# EUROPEAN PATENT SPECIFICATION

(11) **EP 1 430 946 B1**
(45) Date of publication and mention of the grant of the patent: **29.07.2015**
(21) Application number: 02800233.5
(22) Date of filing: 17.09.2002
(51) Int. Cl.: B01J 7/00, B60R 21/26

(54) **INFLATOR WITH A PRESSURIZED MEDIUM**
AUFBLASVORRICHTUNG MIT EINEM DRUCKMEDIUM
DISPOSITIF DE GONFLAGE AVEC DE PRESSURISATION

(30) Priority: 27.09.2001 JP 2001296774
(43) Date of publication of application: 23.06.2004
(73) Proprietor: Daicel Chemical Industries, Ltd., Kita-ku, Osaka-shi Osaka 530-0001 (JP)
(72) Inventor: NAKAYASU, Masayuki, Himeji-shi, Hyogo 672-8079 (JP); GOTO, Yuzo, Himeji-shi, Hyogo 671-1241 (JP); IWAI, Yasunori, Shijyonawate-shi, Osaka 575-0051 (JP)
(74) Representative: Grünecker Patent- und Rechtsanwälte PartG mbB
(86) International application number: PCT/JP2002/009516
(87) International publication number: WO 2003/028875

(56) References cited:
- JP-A- 8 133 000
- US-A- 3 756 621
- US-A- 5 504 288
- US-A- 5 762 368
- US-A- 5 913 537
- US-B1- 6 543 806

## Description

### Technical Field where the Invention belongs

**The present invention relates to an inflator according to the preamble of claim 1. Such inflator is mounted in various** kinds of vehicles to protect a passenger when a vehicle has received the impact from the lateral direction of the vehicle,

### Background Art

**An inflator of the above type is known from** US-A-5762 368**.**

As an inflator for inflating type safety system of an automobile, in order to optimally protect a passenger in accordance with a position of a seat in a vehicle such as a driver side, a front passenger side next to the driver and the like, there are known various kinds of inflators such as an air bag inflator for a driver side, an air bag inflator for a front passenger side next to the driver, an air bag inflator for a side collision, an inflator for a curtain air bag, an inflator for a knee-bolster air bag, an inflator for an inflatable seat belt, an inflator for a tubular system and an inflator for pretensioner and the like.

Among these inflators, the inflator for a curtain air bag inflates and develops the air bag instantaneously to make a curtain having a thickness of some centimeters over windows of a vehicle when the vehicle has received the impact from the sides. The curtain air bag is for the sake of protecting a passenger from an impact applied from the lateral direction of the vehicle, and from an impact when the vehicle is overturned. Therefore, it is necessary to shorten the period to the time when the air bag inflates as compared with a case in which the vehicle is received an impact from the front or the behind. Further, on account of the period of overturning, the duration of the inflation has to be set to about some seconds.

As described above, in the inflator for a curtain air bag, the period to the time when the air bag inflates has to be shortened and the duration of the inflation has to be prolonged. Therefore, a method of inflating an air bag only with a pressurized medium, not with a gas generating agent is adopted. When a combustion gas of the gas generating agent is used, the air bag can be inflated instantaneously, however, because of a high temperature inside the inflated air bag, the air bag is cooled by a temperature difference with respect to the ambient temperature and the air bag is immediately deflated.

Meanwhile, when only the pressurized medium is used, since a temperature of the pressurized medium is lowered due to release of the pressure, the temperature in the air bag is also lowered. Therefore, the air bag is heated by a temperature difference with respect to the ambient temperature, and the duration of the inflation can be held for about some seconds. In view of securing safety of a passenger, however, it is required to maintain a higher internal pressure in the air bag for a longer period. Further, since the air bag is manufactured by sawing clothes, the pressured medium leaking from a seam to reduce an air bag internal pressure is also a factor of lowering of the air bag internal pressure and shortening of the inflating period of the air bag. Therefore, improvement based on this point will be an effective method.

Incidentally, as related conventional techniques, a device for inflating a flexible container using helium and hydrogen is disclosed in USP No. 5, 527, 066. A gas flow device for an air bag using a pressurized inert gas is disclosed in USP No. 5, 782, 486. An air bag apparatus for inflating an air bag by nitrogen or helium is disclosed in USP No. 3,680,886.

US 5 762 368 A shows an inflator 20 of a type in which a body to be inflated is mainly inflated with a pressurized medium charged in the inflator. The pressurized medium comprises oxygen, helium and argon. US 5 762 368 A is silent about the mixing ratio of helium to argon. Furthermore, the inflator comprises an inflator housing which is charged with said pressurized medium and has an opening portion at one end, and a diffuser portion which is fixed to the opening portion side of the inflator housing and is provided with a gas discharging port for discharging, to the outside, said pressurized medium flowing from the opening portion at a time of activation, a rupturable plate closing the flow passage of the pressurized medium between the opening portion of the inflator housing and the diffuser portion, and rupturing means (ignitable material) for rupturing the rupturable plate.

US 5 504 288 A shows an inflator of a type in which a body to be inflated is mainly inflated with a pressurized medium charged in the inflator, wherein the pressurized medium comprises 16% helium and 60% argon, col. 2, lines 66 and 67, the mixing ratio of helium to argon is thus 16 : 60, i.e. 0.266.

US 3 756 621 A shows an inftator of a type in which a body to be inflated, is mainly inflated with a pressurized medium charged in the inflator, wherein the pressurized medium comprises helium and argon and the mixing ratio thereof is in the range of helium: argon = 1 : 9 to 9:1, and the inflator comprises an inflator housing which is charged with said pressurized medium and has an opening portion at one end, and a diffuser portion which is fixed to the opening portion side of the inflator housing and is provided with a gas discharging port for discharging, to the outside, said pressurized medium flowing from the opening portion at a time of activation, a rupturable plate 3 closing the flow passage of the pressurized medium between the opening portion of the inflator housing and the diffuser portion, and rupfiuring means (detonator 6) for rupturing the rupturable plate 3.

An object of the present invention is to provide an inflator for an air bag, which can prolong the duration of the inflation of an air bag, and an air bag apparatus.

The present invention is defined by claim 1.

By applying the inflator of the present invention to an air bag, damage to the air bag due to a rapid discharge of the pressurized medium from the inflator can be suppressed, and the air bag can be inflated for a longer period with a higher pressure.

### Brief Description of the Drawings

Fig. 1 is a sectional view of an inflator of the present invention in the longitudinal direction.
Fig. 2 is a diagram showing the results of a tank pressure test in Embodiment 1 and Comparative Example 1.
Fig. 3 is a diagram showing the results of the tank pressure test in the Embodiment 1 and the Comparative Example 1.

### Description of Numerals

- 10: inflator
- 12: inflator housing
- 19: rupturable plate
- 20: diffuser portion
- 26: igniter

### Preferred Embodiment of the Invention

A pressurized medium for an inflator of the present invention comprises a mixture of helium and argon. The pressurized medium does not contain another gas as a component for the pressurized medium but it may contain another gas to such an extent that it exists as impurities. The mixing ratio of helium and argon in the pressurized medium is in the range of 3: 7 to 7: 3 by molar ratio, preferably, 4: 6 to 6: 4.

The sound velocity of the pressurized medium for an inflator of the present invention is preferably 400 to 800 m/s at 23°C, and more preferably, 500 to 700 m/s.

The coefficient of viscosity of the pressurized medium for an inflator of the present invention is preferably 25 to 40 µPa·s at 300 °K at 50 MPa, and more preferably, 30 to 40 µPa· s.

In the pressurized medium for an inflator of the present invention, as the result of a tank pressure test conducted within a tank under the following conditions, the pressure reducing rate of a tank internal pressure after 0.5 seconds is preferably not more than 25%, and more preferably, not more than 22%

Further, as the result of the tank pressure test conducted within a tank under the following conditions, it is desirable that the tank internal pressure from activation of the inflator preferably up to elapse of 4 seconds, and more preferably up to elapse of 4.5 seconds does not become 0 kPa.

### (Tank pressure test)

A tank test is conducted such that, after an inflator charged with a pressurized medium under pressure of 50, 000 kPa and having 33 mm² of a total opening area of a gas discharging port is inserted into a tank having a single hole with a diameter of 6 mm and an inner volume of 28.3 liters, the inflator is activated to discharge the pressurized medium to measure a pressure change inside a tank. The tank is a cylinder in shape, having both end surfaces closed, and also having a single hole with a diameter of 6 mm at the center of the one end surface. The pressure change is measured by a pressure change detecting sensor attached to a periphery of the tank.

When the pressurized medium for an inflator of the present invention is applied to, for example, an inflator for an air bag of an automobile, the following operation is effected.

Since helium has such a property that, even when a change in pressure occurs, the coefficient of viscosity hardly changes, but argon has such a property that the coefficient of viscosity increases according to rising of pressure, when the pressurized medium of the present invention is charged in the inflator under a high pressure, the viscosity of the whole pressurized medium becomes high. Since, when the pressurized medium is discharged from the inflator, a smooth discharge of the pressurized medium from the gas discharge port is blocked due to increase in viscosity, the gas discharging speed is made slower as compared with a pressurized medium comprising 100% helium. Therefore, the air bag is not damaged due to a rapid ejection, and the duration of the inflation of the air bag is also prolonged because the duration of the ejection of the pressurized medium becomes longer.

Further, when the pressurized medium is ejected in the air bag, it becomes hard to leak the pressurized medium from a seam formed at a time of sawing the air bag because the viscosity of the pressurized medium is higher, as compared with the pressurized medium of 100% helium. For this reason, since the internal pressure of the air bag becomes hard to lower, the duration of the inflation of the air bag can be prolonged while maintaining a higher internal pressure. Incidentally, since when the pressurized medium comprises 100% argon, the coefficient of viscosity of the pressurized medium becomes excessively high, there is a possibility that the duration of the ejection of the pressurized medium from the inflator is excessively prolonged, so that the air bag can not be inflated and developed within a required period.

The pressurized medium for an inflator of the present invention can be charged in a pressure-resistant container and stored therein, and helium and argon stored in individual pressure-resistant containers may be mixed when they are charged in an inflator.

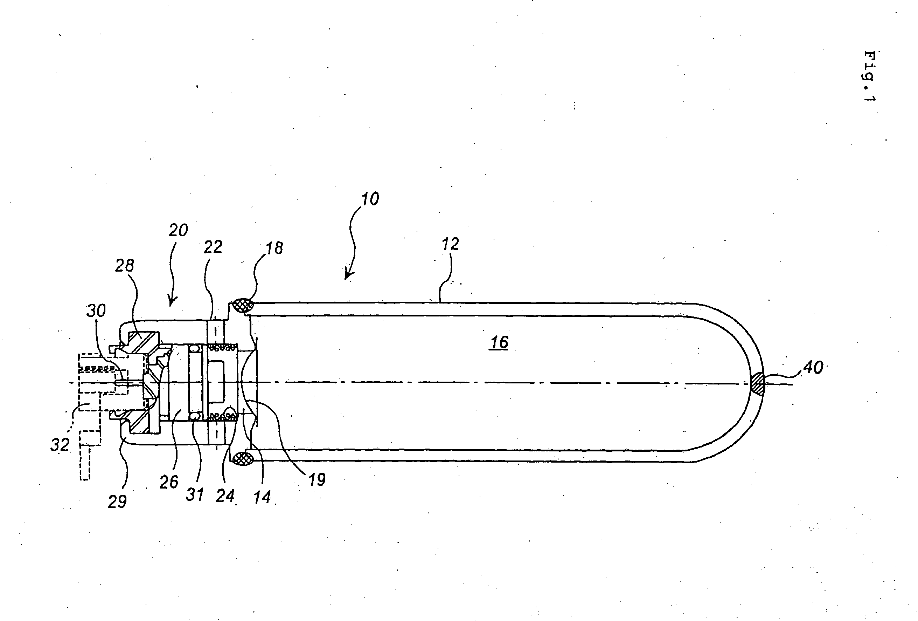

Next, one embodiment of an inflator using the pressurized medium for an inflator of the present invention will be explained with reference to Fig. 1. Fig. 1 is a sectional view in the longitudinal direction of an inflator 10 for a curtain air bag.

One end of an inflator housing 12 has an opening portion 14, and the other end thereof is closed. An inner space 16 is charged with the above-described pressurized medium for an inflator. The pressurized medium is charged from a thin hole of an end portion of the inflator housing 12, and the thin hole is closed by welding or the like after a sealing pin is fitted into the thin hole. The numeral 40 indicates a state in which the thin hole is closed by welding. Incidentally, a cross section of the inflator housing 12 in the widthwise direction is circular in shape, and the opening portion 14 is also circular in shape.

A diffuser portion 20 is fixed, at a connection portion 18 by welding, in the opening portion 14 side on the inflator housing 12. An outer shell of the diffuser portion 20 is formed with a diffuser housing 28. The diffuser portion 20 has a gas discharging port 22 for discharging the pressurized medium flowing from the opening portion 14 at actuation, and a filter 24 made of wire mesh is provided to cover the gas discharging port 22 from the inside. Thus, the pressurized medium is discharged out of the gas discharging port 22 always through the filter 24.

The total area (A₁) of the gas discharging port 22 and the area (A₂) of the opening portion 14 of the inflator housing 12 are set to A₁/A₂≤1, preferably A₁/A₂<1, more preferably A₁/A₂≤0.95, and still more preferably A₁/A₂≤0.85. It is preferable that the lowest value of A₁/A₂ is 0.015.

The opening portion 14 of the inflator housing 12 is closed with a rupturable plate 19 arranged to the diffuser portion 20. Before actuation, the inner space 16 of the inflator housing 12 is maintained in a high-pressure airtight state, and the diffuser portion 20 is under the normal pressure. Such an inflator housing 12 can be formed in accordance with swaging or spinning a pipe with a uniform diameter.

The diffuser portion 20 is provided with an igniter 26 having a priming as a rupturing means for the rupturable plate 19. The igniter 26 is fitted into the diffuser housing 28 and mounted to the diffuser portion 20, and is fixed by crimping an end portion 29 of the diffuser housing 28. The numeral 30 represents a conductive pin to electrify the igniter 26, the numeral 31 represents an O-ring, and the numeral 32 shown with a broken line represents a connector to be connected to a power supply when the inflator is mounted to the vehicle.

Next, the operation at the time of the activation of the inflator 10 for a curtain air bag will be explained. When mounted to the vehicle, the inflator 10 for a curtain air bag is mounted as an air bag apparatus comprising an activation signal-outputting means including an impact sensor and a control unit, and a module case accommodating the above inflator 10 for a curtain air bag and a curtain air bag. When the vehicle receives the impact, the igniter 26 is activated upon receiving a signal from the impact sensor of the above apparatus, the priming is ignited and burnt to rupture the rupturable plate 19.

The opening portion 14 is opened due to rupture of the rupturable plate 19, and the pressurized medium in the inner space 16 is discharged out of the gas discharging port 22 via the filter 24 to inflate the curtain air bag. At this time, since the pressurized medium includes a proper amount of argon, its viscosity becomes higher as compared with that of a pressurized medium comprising 100% helium, so that the pressurized medium becomes hard to be discharged from the gas discharging port 22 smoothly. As a result, since the discharging speed of the pressurized medium becomes slow, the duration of the inflation of the air bag can be prolonged correspondingly. Also, the discharging pressure of the pressurized medium is controlled by the gas discharging port 22, and the filter 24 prevents combustion residues of the priming and fragments of the rupturable plate 19 from being ejected into the curtain air bag.

The pressurized medium under a high pressure is released at once, and the temperature inside the inflated air bag becomes lower but heated by the difference from the ambient temperature, and thereby the inflation of the air bag is maintained for some seconds. And, since the pressurized medium discharged into the air bag contains a proper amount of argon, the viscosity thereof is high as compared with that of a pressurized medium comprising 100% helium, so that leakage from a seam formed at a time of sawing the air bag hardly occurs. Therefore, the air bag can be left in a high internal pressure correspondingly, and the duration of the inflation can be made longer.

When 100% argon (the theoretical value of the sound velocity at 23°C = 332 m/s) is used as the pressurized medium, the duration of the inflation can be prolonged as described above, but such a use is impractical because too much time is required from the collision to inflation and development of the air bag. Also, even when 100% helium is used as the pressurized medium, its discharging speed can be close to the discharging speed obtained when the pressurized medium of the present invention is used. However, regarding the maintaining ability of the air bag internal pressure, the pressurized medium using 100% helium is not effective at all, and the pressurized medium of the present invention is also superior to the other pressurized mediums for an inflator from this point

Incidentally, when the inflator 10 is applied as a side inflator, an air bag is connected to the gas discharging port 22 directly or via a proper adapter.

### Examples

The present invention will be explained more specifically by referring the examples. However, the present invention is not limited thereto.

### Example 1 and Comparative Example 1

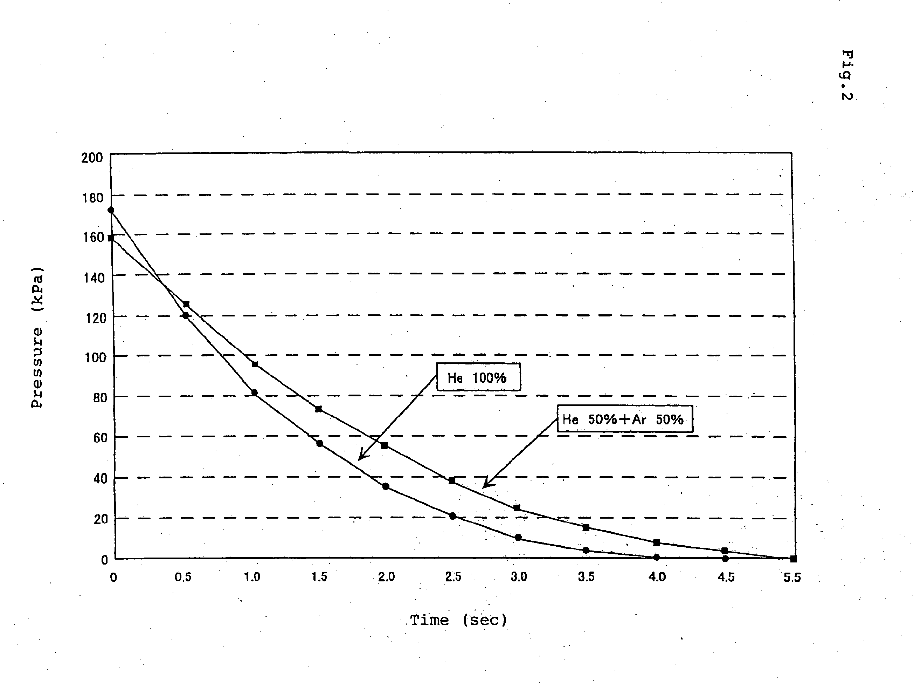

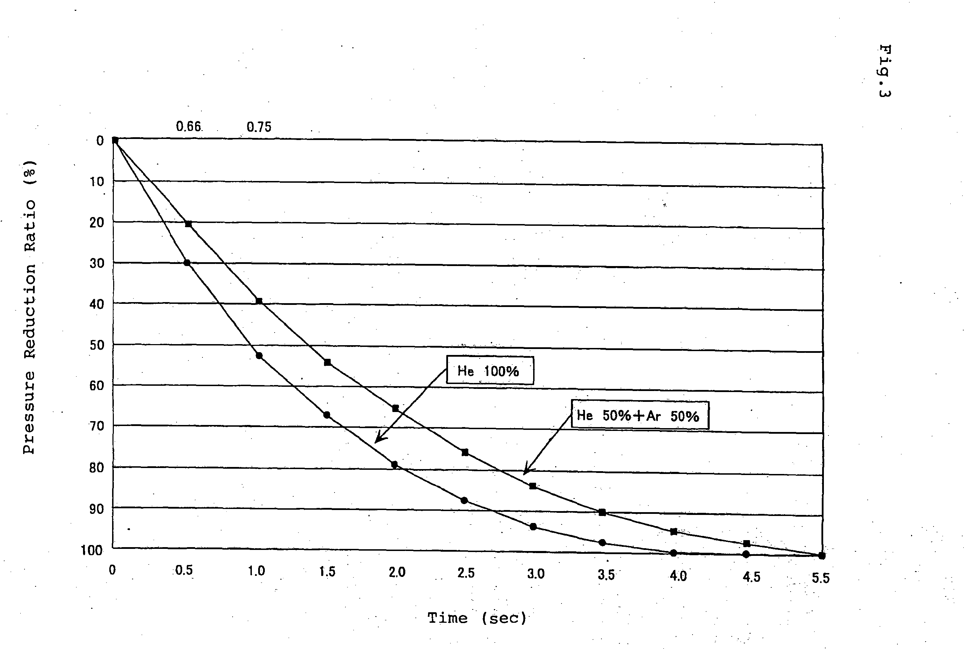

Using the inflators (the total area of the gas discharging port 22: 33 mm²) shown in Fig. 1, inflators, in which a mixed gas of helium: argon = about 1: 1 (1.62 mol in total; the theoretical value of the sound velocity at 23°C=671m/s) (Example 1), and a gas comprising only helium (helium of 1.7 mol; the theoretical value of the sound velocity at 23°C = 1010 m/s) (Comparative Example 1) were charged as the pressurized medium under the charging pressure of 50,000 kPa respectively, were produced. Using these inflators, tank pressure tests (at the normal temperature) were conducted. The results are shown in Fig. 2 and Fig. 3.

Fig. 2 shows test results of changes with time of the tank internal pressure. The tank internal pressure indicates on an ordinate and the time (sec) indicates on an abscissa. A time point when the tank internal pressure has become the maximum is defined as 0 sec. As apparent in Fig. 2, it is shown that the changes with time in pressure reduction in Example 1 (He 50% + Ar 50%) is smaller so that the air bag can be inflated for a longer term, as compared with Comparative Example 1 (He 100%).

Fig. 3 shows test results of changes with time of a degree of reduction of a tank internal pressure (pressure reduction rate). The pressure reduction rate indicates on an ordinate, the maximum value of the tank internal pressure is defined as a pressure reduction rate of 0%, the time (sec) indicates as an abscissa, and a pressure reduction rate of 0% is defined as 0 sec on the basis of Fig. 2. As apparent in Fig. 3, it is shown that the reduction rate of the tank internal pressure in Example 1 is smaller so that the air bag therein can be inflated with a higher pressure for a longer term, as compared with Comparative Example 1.

In Fig. 3, particularly, using a ratio of pressure reduction rates of Example 1 (He 50% + Ar 50%) and Comparative Example 1 (He 100%) after 0.5 seconds from the tank maximum value, Example 1/Comparative Example 1 = 20%/30% = about 0.66 is obtained, and this value approximately corresponds to the ratio of the sound velocities, namely, Example 1/Comparative Example 1 = 671 (m/s)/1010 (m/s) = about 0.66. Therefore, it is considered that pressure drop occurs in proportion to the sound velocity until 0.5 seconds elapse from the time point (the time point of 0 sec on the abscissa) of the maximum value of the tank pressure.

## Claims

1. An inflator (10) of a type in which a body to be inflated is mainly inflated with a pressurized medium charged in the inflator (10), wherein the pressurized medium comprises helium and argon and the mixing ratio thereof is in the range of helium: argon = 3:7 to 7:3 by molar ratio, the coefficient of viscosity of the pressurized medium is 25 to 40 µPa * s at 50 MPa and at 300 K, and the inflator (10) comprises an inflator housing (12) which is charged with said pressurized medium and has an opening portion (14) at one end, and a diffuser portion (20) which is fixed to the opening portion side of the inflator housing (12) and is provided with a gas discharging port (22) for discharging, to the outside, said pressurized medium flowing from the opening portion (14) at a time of activation, the ratio (A1/A2) of the total area (A1) of the gas discharging port (22) and the area (A2) of the opening portion (14) of the inflator housing (12) being set to less than or equal to 1 and greater than or equal to 0.015, a rupturable plate (19) closing the flow passage of the pressurized medium between the opening portion (14) of the inflator housing (12) and the diffuser portion (20), and a rupturing means (26) for rupturing the rupturable plate (19).

2. An inflator (10) according to claim 1, wherein the sound velocity of the pressurized medium is 400 to 800 m/s at 23°C.

3. An air bag apparatus comprising an activation signal-outputting means including an impact sensor and a control unit, and a module case accommodating said inflator according to claim 1 or 2 and an air bag.

## Patentansprüche

1. Aufblasvorrichtung (10) einer Art, bei welcher ein aufzublasender Körper hauptsächlich mit einem unter Druck stehendem Medium aufgeblasen wird, welches in die Aufblasvorrichtung (10) eingefüllt wird, wobei das unter Druck stehende Medium Helium und Argon umfasst und deren Mischverhältnis in dem Bereich von Helium:Argon=3:7 zu 7:3 in Bezug auf das Molverhältnis beträgt, der Viskositätskoeffizient des unter Druck stehenden Mediums 25 bis 40 µPa * s bei 50 MPa und bei 300 K beträgt, und wobei die Aufblasvorrichtung (10) ein Gehäuse (12) der Aufblasvorrichtung, welches mit dem unter Druck stehenden Medium befüllt ist und einen Öffnungsbereich (14) an einem Ende aufweist, und einen Diffusorbereich (20), welcher an der Seite des Öffnungsbereiches des Gehäuses (12) der Aufblasvorrichtung befestigt ist und mit einer Gasabgabeöffnung (22) versehen ist, um das unter Druck stehende Medium, welches aus dem Öffnungsbereich (14) fließt, zu einem Aktivierungszeitpunkt nach außen abzugeben, wobei das Verhältnis (A1/A2) der gesamten Fläche (A1) der Gasabgabeöffnung (22) und der Fläche (A2) des Öffnungsbereichs (14) des Gehäuses (12) der Aufblasvorrichtung auf 1 oder weniger und auf 0,015 oder mehr eingestellt ist, wobei eine zerbrechbare Platte (19) den Durchflusskanal des unter Druck stehenden Mediums zwischen dem Öffnungsbereich (14) des Gehäuses (12) der Aufblasvorrichtung und des Diffusorbereichs (20) verschließt, und ein Zerbrechmittel (26) zum Zerbrechen der zerbrechbaren Platte (19) umfasst.

2. Aufblasvorrichtung (10) nach Anspruch 1, wobei die Schallgeschwindigkeit des unter Druck gesetzten Mediums 400 bis 800 m/s bei 23 °C beträgt.

3. Airbagvorrichtung, umfassend ein Aktivierungssignalausgabemittel einschließlich eines Aufprallsensors und einer Steuereinheit, und ein Modulgehäuse zur Aufnahme der Aufblasvorrichtung gemäß Anspruch 1 oder 2 und eines Airbags.

## Revendications

1. Dispositif de gonflage (10) d'un type dans lequel un corps à gonfler est principalement gonflé à l'aide d'un milieu pressurisé chargé dans le dispositif de gonflage (10), dans lequel le milieu pressurisé comprend de l'hélium et de l'argon dont le rapport de mélange est compris dans une plage helium:argon = 3:7 à 7:3 en rapport molaire, le coefficient de viscosité du milieu pressurisé est compris entre 25 et 40 µPa.s à 50 MPa et 300 K, et le dispositif de gonflage (10) comprend un boîtier de dispositif de gonflage (12) qui est chargé avec ledit milieu pressurisé et comporte une partie d'ouverture (14) à une extrémité, et une partie diffuseur (20) qui est fixée au côté de la partie d'ouverture du boîtier du dispositif de gonflage (12) et est pourvue d'un orifice d'évacuation de gaz (22) pour évacuer vers l'extérieur ledit milieu pressurisé qui s'écoule hors de la partie d'ouverture (14) à un moment d'activation, le rapport (A1/A2) de la surface totale (A1) de l'orifice d'évacuation de gaz (22) par la surface (A2) de la partie d'ouverture (14) du boîtier du dispositif de gonflage (12) étant configuré pour être inférieur ou égal à 1 et supérieur ou égal à 0,015, une plaque de rupture (19) fermant le passage d'écoulement du milieu pressurisé entre la partie d'ouverture (14) du boîtier du dispositif de gonflage (12) et la partie diffuseur (20), et un moyen de rupture (26) servant à rompre la plaque de rupture (19).

2. Dispositif de gonflage (10) selon la revendication 1, dans lequel la vitesse du son dans le milieu pressurisé est de 400 à 800 m/s à 23 °C.

3. Appareil à coussin gonflable de sécurité comprenant un moyen de sortie d'un signal d'activation comprenant un capteur d'impact et une unité de commande, ainsi qu'un boîtier de module recevant ledit dispositif de gonflage selon la revendication 1 ou 2 et un coussin gonflable de sécurité.
